**Europäisches Patentamt**

(19) **European Patent Office**

**Office européen des brevets**

(11) Publication number : **0 364 049 B1**

(12) # EUROPEAN PATENT SPECIFICATION

(45) Date of publication of patent specification :
**12.08.92 Bulletin 92/33**

(51) Int. Cl.⁵ : **A01J 25/13**

(21) Application number : **89202560.2**

(22) Date of filing : **10.10.89**

(54) **Plastic cheese mould with drainage slits formed during the manufacture of the upright wall by injection moulding.**

(30) Priority : **11.10.88 NL 8802492**

(43) Date of publication of application :
**18.04.90 Bulletin 90/16**

(45) Publication of the grant of the patent :
**12.08.92 Bulletin 92/33**

(84) Designated Contracting States :
**AT BE CH DE ES FR GB GR LI NL SE**

(56) References cited :
**DE-A- 2 407 583**
**DE-A- 2 823 182**
**DE-A- 2 909 960**
**FR-A- 2 063 234**
**GB-A- 2 040 667**

(73) Proprietor : **CRELLIN B.V.**
**24, Nikkelstraat**
**NL-3067 GR Rotterdam (NL)**

(72) Inventor : **Tameris, Hendrikus Matheus**
**81c Verboomstraat**
**NL-3082 JC Rotterdam (NL)**

(74) Representative : **van der Veken, Johannes Adriaan et al**
**EXTERPATENT B.V. P.O. Box 90649**
**NL-2509 LP 's-Gravenhage (NL)**

EP 0 364 049 B1

Jouve, 18, rue Saint-Denis, 75001 PARIS

## Description

The invention relates to a plastic cheese mould being substantially rigid, comprising a bottom and upright wall(s) the wall(s) being provided with drainage apertures and having on their inner side(s) whey discharge recesses which open into the drainage apertures the whey discharge recesses being defined by a net structure formed during the injection moulding of the wall(s), the net structure on the upright wall(s) comprising first structure ribs running in the vertical direction.

Such a plastic cheese mould is known per se from DE-A-2823182. The drainage apertures in the wall of this cheese mould are formed by pressing steel needles through the wall. Under those conditions it might occur that curd residues are left behind after cleaning of the cheese mould.

The object of the invention is now to provide a plastic cheese mould of the abovementioned type in which this disadvantage do not occur.

This object is achieved according to the invention in that the drainage apertures are drainage slits diverging from the inner side towards the outer side of the upright wall(s) and are formed during the injection moulding of the upright wall(s), in that said first structure ribs are interrupted by injection moulded additional channels, interconnecting whey discharge recesses being located at the opposite sides of said structure ribs, and in that the cheese mould is angular in cross section, preferably rectangular, the walls being separately premoulded and joined to each other along the corners of the mould, preferably by welding.

It should be noted that DE-A-2407583 discloses a cheese mould being rectangular in cross section with drainage slits obtained by punching its wall and the walls being separately premoulded and joined to each other along the corners of the mould.

Furthermore DE-A-2909960 discloses a rectangular injection moulded thin walled cheese mould with deformable walls and with rectangular non-diverging drainage slits in said walls.

FR-A-2063234 discloses a plastic cheese mould with diverging drainage slits in the bottom of a cheese mould, however the upstanding walls are provided with drainage holes.

Moreover, the document does not disclose whether the drainage slits in the bottom have been formed by injection moulding.

Forming the drainage slits during formation of the walls by injection moulding provides slits with very smooth edges, so that after cleaning, the plastic cheese mould will no longer contain any undesirable curd residues in which undesirable bacteria can multiply and subsequently give rise to undesirable infections in a cheese obtained with such a plastic cheese mould.

By using drainage slits diverging from the inner side of the upright walls towards the outerside, the drainage slit moulding parts disposed in a moulding device for forming the drainage slits may consequently be easily removed after the formation of a cheese mould wall.

A plastic cheese mould according to the invention is preferably made of polyethylene or polypropylene, more particularly polyethylene.

The whey discharge recesses present on the inner side of the wall of such a plastic cheese mould are also formed during injection moulding expediently forming grooves. A major advantage is also obtained in this way, since the whey discharge grooves present do not have any rough parts like known grooves which are formed by mechanical working of upright walls of a plastic cheese mould formed by injection moulding.

The whey discharge recesses bound a net structure on the inside wall, thereby making it possible to give a cheese an appearance which is similar to the hitherto known cheeses which are formed using a cheese mould and a plastic net disposed detachably therein. Such a net structure also has the advantage that a very good whey discharge can be ensured. Since shrinkage of the plastic after injection moulding means that grooves or recesses on the inside wall of such a plastic cheese mould can be considerably reduced, it is advisable for the formation of such grooves or recesses to use a moulding device provided with groove-forming or recess-forming elevations which are of greater height than the ultimate depth of the grooves or recesses present in the finished cheese mould.

It is very surprising that very good whey discharge is obtained with such a net structure, preferably a cheese net structure, since in the design known hitherto a cheese moulding net lies loose against the inside wall of a cheese mould and is not fused therewith.

Preferably the drainage slits are disposed in parallel rows of aligned slits, and the slits of respective rows are staggered relative to each other.

The upright walls of the plastic cheese mould expediently carry reinforcement ribs by means of which the forces exerted on the upright walls during the pressing of curds to cheese can be more rapidly absorbed.

The reinforcement ribs expediently extend parallel and/or at right angles to the bottom face. A metal reinforcement strip, which may or may not be circular, is expediently provided in the reinforcement ribs. This reinforcement strip can be provided with through-running holes in order to ensure good anchoring of the reinforcement strip in the plastic. This prevents particularly sagging of the walls during pressing of the curd.

The cheese mould can also be reinforced by means of a surrounding frame of interconnected metal strips.

An angular plastic cheese mould according to the invention is rectangular and formed by walls which are welded together in the corners. In this way a cheese mould according to the invention can be manufactured with simple moulds, since all that is needed is a mould for forming upright walls, following which in a subsequent separate operation the walls are welded to each other in the corners by mirror or ultrasonic welding. It has been found that in this way a plastic cheese mould being very resistant to the forces exerted on the upright walls during pressing of the curd to cheese, can be obained.

The invention will now be explained with reference to an example of an embodiment shown in the drawing, in which:

Fig. 1 shows a cheese mould according to the invention;

Fig. 2 is a detail of an outside of the wall of a cheese mould according to fig. 1;

Fig. 3 is a detail of the inner side of the upright wall of a cheese mould according to fig. 1;

Fig. 3a is a cross-section of a mould in which an upright wall of a cheese mould according to fig. 1 is formed;

Fig. 4 is a part of a longitudinal section of an upright wall of a cheese mould according to the invention;

Fig. 5 is a detail of the wall of whey discharge recesses which form a cheese net structure formed by injection moulding;

Fig. 6 is a part of a longitudinal section of an upright wall of a cheese mould provided with a metal reinforcement strip.

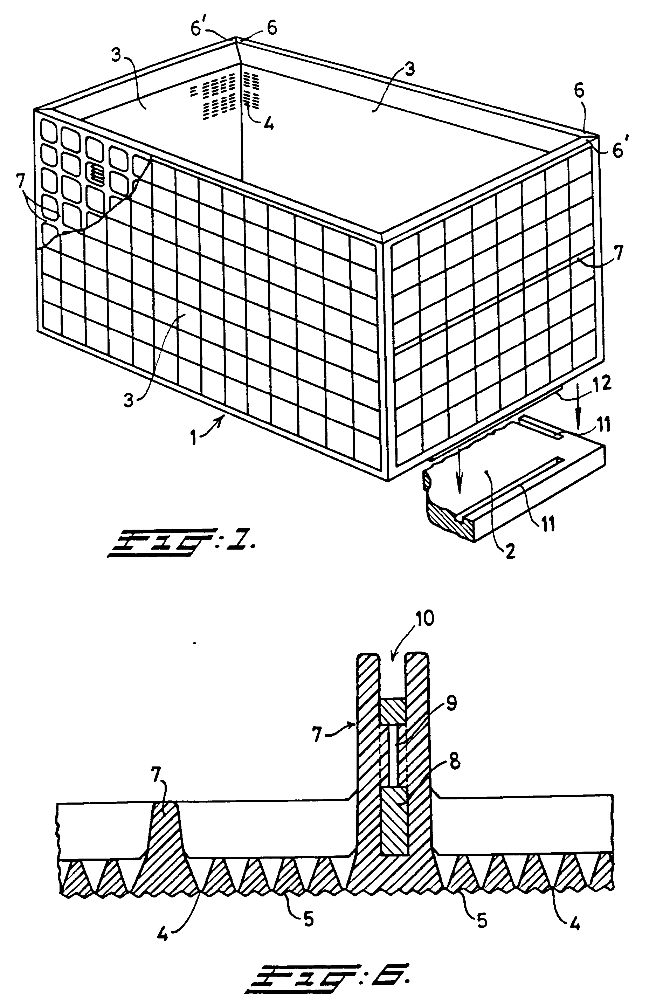

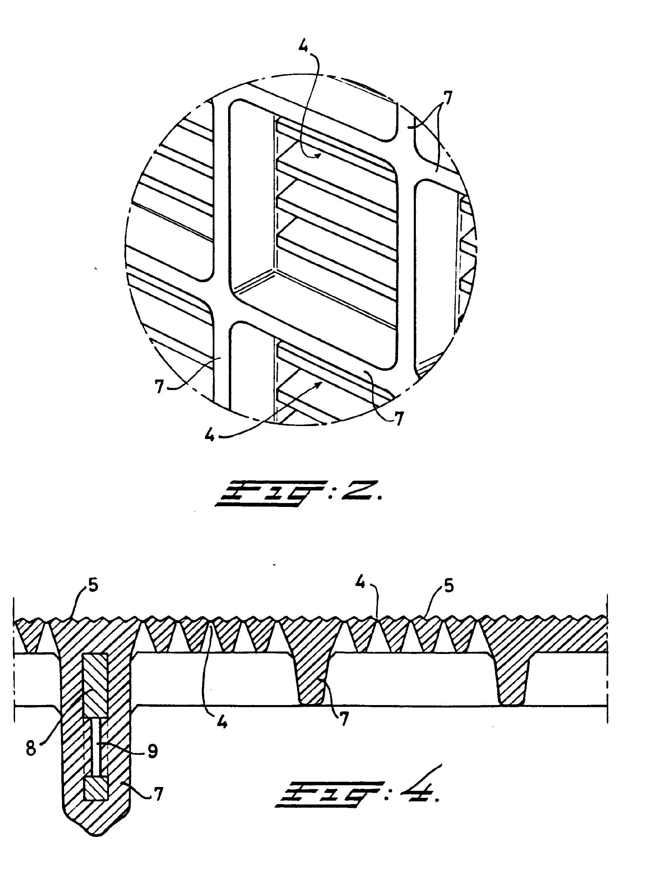

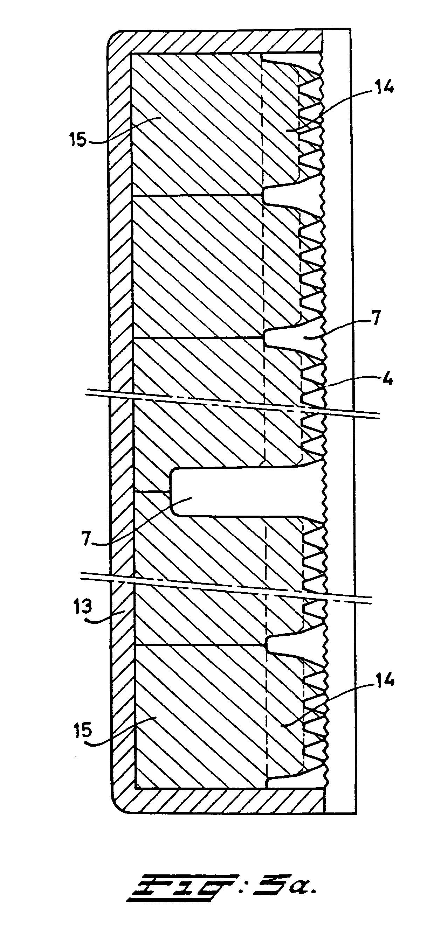

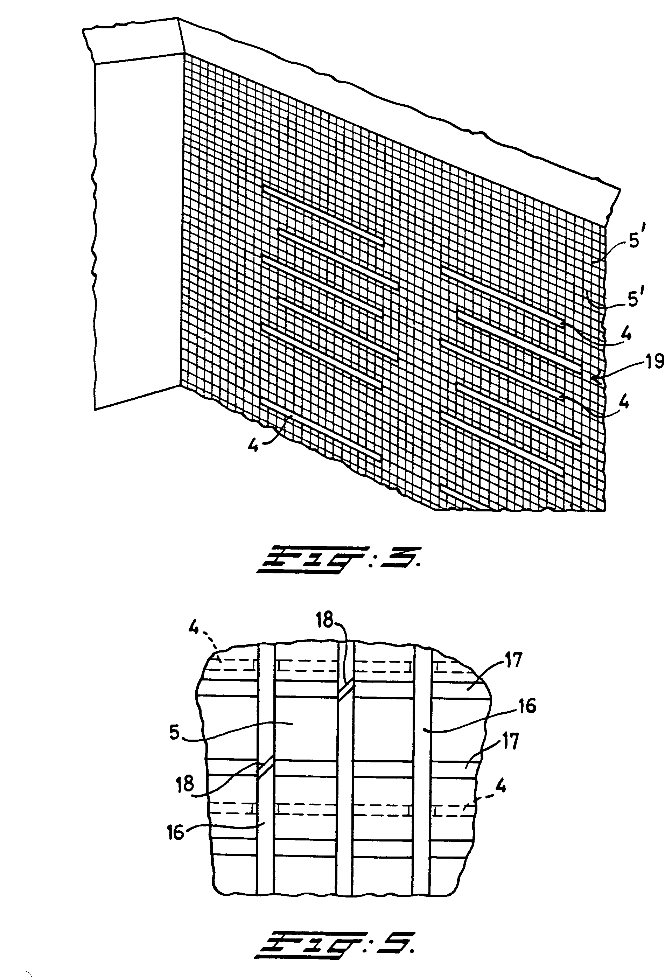

Fig. 1 shows a cheese mould 1 of plastic, particularly polyethylene, comprising four upright walls 3 which together bound a rectangular cheese mould.

The upright walls 3, which are continuously joined together at their edges 6, 6' e.g. by ultrasonic welding and thereby form a rectangular cheese mould, can be joined to a bottom 2, provided with connecting grooves 11 which can contain connecting ribs 12 located on the bottom side of each upright walls 3. The corners are bevelled in order to permit good engagement, preferably welding together, of the corners of the upright walls 3. The use of separate upstanding walls to be heatsealed to each other is very advantageous as now only flat wall parts have to be injection moulded thereby avoiding the application of complicated moulding devices. Moreover walls 3 of appropriate size may be separated from an in one step injection moulded part of greater size.

The upright walls 3 are provided with drainage holes in the form of drainage slits 4 during the injection moulding of the walls. In order to ensure that after injection moulding of the cheese mould in a moulding device 13 the moulding device shaping parts 14 for shaping the drainage slits 4 can be removed easily from the finished wall 3, the drainage slits 4 and the mould shaping parts 14 diverge to the outside.

The drainage slits 4 are expediently disposed in rows 19 running in the lengthwise direction of the walls 3, the drainage slits 4 of one row being staggered relative to the row above.

In order to obtain a cheese mould which is resistant to the great forces being exerted during pressing of the curd to a cheese in such a cheese mould, the walls 3 are provided on the outside with reinforcement ribs 7 extending both at right angles and parallel to the bottom 2. For this the moulding device 13 is provided with moulding blocks 15 which are integral with the moulding device shaping parts 14.

For further reinforcement, it is possible during injection moulding of the cheese mould to provide a reinforcement rib 7 with a recess 10 in which a metal reinforcement strip 8, expediently provided with through-running holes 9, can be fitted after removal from the moulding device. Heat-sealing the aperture 10 after fitting of the metal reinforcement strip 8 means that a cheese mould with reinforcement ribs 7 which are additionally reinforced by a metal reinforcement strip 8 is obtained. Through heating of the plastic it can be ensured that in the finished product the plastic extends through the holes 9 of the metal reinforcement strip 8.

In a very convenient embodiment the cheese mould is reinforced by surrounding same with a metal reinforcing frame, such as formed by interconnected metal strips.

In case of surrounding reinforcements it is even possible not to interconnect the walls of the cheese mould by heat sealing.

The inside of the upright walls is expediently provided with whey discharge recesses 5' which are formed during the injection moulding, and which open out into drainage slits 4.

It is particularly advantageous that the cheese mould has on the inside wall whey discharge recesses 5 which together form a net structure 6, preferably a cheese net structure, formed by injection moulding. This net structure is formed by first structure ribs 16 running in the vertical direction of the upright walls 3 and second structure ribs 17 running in the lengthwise direction of the upright walls 3.

During the injection moulding additional channels 18 are formed on the inner side of the wall which connect the whey discharge recesses 5, the openings which in the known cheese mould were bounded by the threads of a detachable cheese net.

In order to facilitate the removal of a pressed cheese from such a cheese mould, the first structure ribs 16 are expediently made higher than the second structure ribs 17. At the points of intersection the ribs have the height of the first structure ribs 16.

It goes without saying that the bottom 2 can be screwed to the unit formed by the walls and that the walls 3 may also be screwed to each other at their edges.

**Claims**

1. A plastic cheese mould being substantially rigid, comprising a bottom (2) and upright wall(s) (3), the wall(s) being provided with drainage apertures (4) and having on their inner side(s) whey discharge recesses (5) which open into the drainage apertures (4), the whey discharge recesses (5) being defined by a net structure formed during the injection moulding of the wall(s), the net structure on the upright walls comprising first structure ribs (16) running in the vertical direction,
characterized in that, the drainage apertures are drainage slits (4) diverging from the inner side towards the outer side of the upright wall(s) and are during the injection moulding of the upright wall(s), in that said first structure ribs (16) are interrupted by injection moulded additional channels (18) interconnecting whey discharge recesses (5) being located at the opposite sides of said structure ribs, and in that the cheese mould is angular in cross section, preferably rectangular, the walls being separately premoulded and joined to each other along the edges (6, 6') of the mould, preferably by welding.

2. A plastic cheese mould according to claim 1 or 2, characterized in that the drainage slits (4) are disposed in parallel rows of aligned slits, and the slits of respective rows are staggered relative to each other.

3. A plastic cheese mould according to claim 1 or 2, characterized in that the net structure is formed by said first structure ribs (16) running in the vertical direction of the upright wall and second structure ribs (17) running perpendicular thereto in the direction parallel to the bottom (2), said first structure ribs (16) being higher than second structure ribs (17).

4. A plastic cheese mould according to anyone of claims 1 to 3, characterized in that the upright walls (3) have reinforcement ribs (7), preferably said reinforcement ribs (7) extend parallel to and/or at right angles to the bottom face.

5. A plastic cheese mould according to anyone of claims 1 to 4, characterized in that the cheese mould is provided with at least one reinforcing strip (8).

6. A plastic cheese mould according to claims 4 and 5, characterized in that the metal reinforcement strip (8) is provided in the reinforcement ribs (7).

7. A plastic cheese mould wall suitable for use in a plastic cheese mould according to any one of claims 1-6.

**Patentansprüche**

1. Im wesentlichen steife Käseform aus Kunststoff, welche einen Boden (2) und (eine) aufrecht stehende Wandung(en) (3) aufweist, wobei die Wandung(en) mit Ablauföffnungen (4) versehen ist (sind) und auf der (den) Innenseite(n) Molkeabführrinnen (5) ausgebildet sind, welche sich zu den Ablauföffnungen (4) öffnen, wobei die Molkeabführrinnen (5) durch eine während des Spritzgießens der Wandung(en) gebildete Netzstruktur begrenzt sind, welche auf den aufrecht stehenden Wandungen erste, in vertikaler Richtung verlaufende Strukturrippen (16) aufweist,
dadurch gekennzeichnet, daß die Ablauföffnungen Ablaufschlitze (4) sind, welche sich von der Innenseite zur Außenseite der aufrecht stehenden Wandung(en) hin erweitern und während des Spritzgießens der aufrecht stehenden Wandung(en) gebildet werden, daß die ersten Strukturrippen (16) durch zusätzliche Kanäle (18), die im Spritzguß hergestellt sind, unterbrochen werden, wobei die Kanäle die an den gegenüberliegenden Seiten der Strukturrippen liegenden Molkeabführrinnen (5) miteinander verbinden, und daß die Käseform einen eckigen, vorzugsweise rechteckigen, Querschnitt aufweist, wobei die Wandungen einzeln vorgeformt und entlang der Kanten (6, 6') der Form vorzugsweise durch Verschweißen miteinander verbunden werden.

2. Käseform aus Kunststoff nach Anspruch 1, dadurch gekennzeichnet, daß die Ablaufschlitze (4) in parallelen Reihen fluchtender Schlitze angeordnet sind und die Schlitze einer jeweiligen Reihe gegeneinander versetzt angeordnet sind.

3. Käseform aus Kunststoff nach Anspruch 1 oder 2, dadurch gekennzeichnet, daß die Netzstruktur durch die ersten Strukturrippen (16) gebildet wird, die in vertikaler Richtung der aufrecht stehenden Wandung verlaufen, und durch zweite Strukturrippen (17), die senkrecht dazu in einer zum Boden (2) parallelen Richtung verlaufen, wobei die ersten Strukturrippen (16) höher als die zweiten Strukturrippen (17) sind.

4. Käseform aus Kunststoff nach einem der Ansprüche 1 bis 3, dadurch gekennzeichnet, daß die aufrecht stehenden Wandungen (3) Verstärkungsrippen (7) aufweisen, und daß die Verstärkungsrippen (7) vorzugsweise parallel und/oder im rechten Winkel zur Bodenfläche verlaufen.

5. Käseform aus Kunststoff nach einem der Ansprüche 1 bis 4, dadurch gekennzeichnet, daß die Käseform mindestens einen Streifen (8) zur Aussteifung aufweist.

6. Käseform aus Kunststoff nach den Ansprüchen 4 und 5, dadurch gekennzeichnet, daß der metallene Aussteifungsstreifen (8) in den Verstärkungsrippen (7) vorgesehen ist.

7. Käseformwandung aus Kunststoff, geeignet zur Verwendung bei einer Käseform aus Kunststoff nach einem der Ansprüche 1 bis 6.

## Revendications

1. Moule à fromage en matière plastique pratiquement rigide comprenant un fond (2) et une ou des paroi(s) verticale(s) (3), la ou les parois étant munies d'ouvertures de drainage (4) et comportant sur leur(s) côté(s) intérieur(s) des creux d'évacuation de lactosérum (5) qui s'ouvrent dans les ouverture(s) de drainage (4), les creux d'évacuation de lactosérum (5) étant définis par une structure en filet formée pendant le moulage par injection des paroi(s), la structure en filet sur les parois verticales comprenant des premières nervures de structure (16) allant dans le sens vertical, caractérisé en ce que les ouvertures de drainage sont des fentes de drainage (4) divergeant du côté intérieur vers le côté extérieur des paroi(s) verticale(s) et sont fabriquées pendant le moulage par injection des paroi(s) verticale(s), en ce que lesdites premières nervures de structure (16) sont interrompues par des canaux supplémentaires (18) moulés par injection couplant les creux d'évacuation de lactosérum (5) placés sur les côtés opposés auxdites nervures de structure, et en ce que le moule à fromage est de section angulaire, de préférence rectangulaire, les parois étant prémoulées séparément et reliées les unes aux autres le long des coins (6, 6') du moule, de préférence par soudure.

2. Moule à fromage en matière plastique selon la revendication 1, caractérisé en ce que les fentes de drainage (4) sont disposées en rangées parallèles de fentes alignées et en ce que les fentes des rangées sont respectivement décalées les unes par rapport aux autres.

3. Moule à fromage en matière plastique selon la revendication 1 ou 2, caractérisé en ce que la structure en filet est formée par lesdites premières nervures de structure (16) allant dans le sens vertical de la paroi verticale et des secondes nervures de structure (17) perpendiculaires dans le sens parallèle au fond (2), lesdites premières nervures de structure (16) étant plus hautes que les secondes nervures de structure (17).

4. Moule à fromage en matière plastique selon l'une des revendications 1 à 3, caractérisé en ce que les parois verticales (3) comportent des nervures de renforcement (7), qui sont, de préférence, parallèles et/ou perpendiculaires à la face du fond.

5. Moule à fromage en matière plastique selon l'une des revendications 1 à 4, caractérisé en ce que le moule à fromage est muni d'au moins une bande de renforcement (8).

6. Moule à fromage en matière plastique selon la revendication 5, caractérisé en ce que la bande de renforcement (8) en métal est munie de nervures de renforcement (7).

7. Paroi de moule à fromage en matière plastique adéquate pour être utilisée dans un moule à fromage en matière plastique selon l'une des revendications 1 à 6.

_Fig: 1._

_Fig: 6._

FIG: 2.

FIG: 4.

FIG : 5a.

FIG:3.

FIG:5.